# EUROPÄISCHE PATENTANMELDUNG

(11) **EP 2 611 197 A1**
(43) Veröffentlichungstag der Anmeldung: **03.07.2013**
(21) Anmeldenummer: 12008161.7
(22) Anmeldetag: 06.12.2012
(51) Int. Cl.: H04N 21/43, H04N 21/63

(54) **System und Verfahren zur Wiedergabe von ersten Wiedergabedaten und wenigstens zweiten Wiedergabedaten, Computerprogramm und Computerprogrammprodukt**

(30) Priorität: 30.12.2011 DE 102011122590
(71) Anmelder: Deutsche Telekom AG, 53113 Bonn (DE)
(72) Erfinder: Karall, Dominik, AT-1020 Wien (AT); Fröller, Patrick, AT-2700 Wiener Neustadt (AT); Wirths, Wolfgang, 53175 Bonn (DE)
(74) Vertreter: Schwöbel, Thilo K.

(57) **Zusammenfassung**

Es wird ein System und ein Verfahren zur Wiedergabe von ersten Wiedergabedaten und wenigstens zweiten Wiedergabedaten vorgeschlagen, wobei das System ein erstes Wiedergabegerät und wenigstens ein zweites Wiedergabegerät aufweist, wobei das erste Wiedergabegerät vorgesehen ist, die ersten Wiedergabedaten in einen ersten Wiedergabedatenstrom umzuwandeln und dadurch die ersten Wiedergabedaten mittels des ersten Wiedergabegeräts wiederzugeben, wobei das zweite Wiedergabegerät vorgesehen ist, die zweiten Wiedergabedaten in einen zweiten Wiedergabedatenstrom umzuwandeln und dadurch die zweiten Wiedergabedaten mittels des zweiten Wiedergabegeräts wiederzugeben, wobei die Generierung einer mit dem Fortschritt der Wiedergabe des ersten Wiedergabedatenstroms am ersten Wiedergabegerät korrelierenden Wiedergabe-Fortschrittsinformation durch das erste Wiedergabegerät vorgesehen ist, wobei ein Empfang der Wiedergabe-Fortschrittsinformation durch das zweite Wiedergabegerät vorgesehen ist und wobei die Wiedergabe des zweiten Wiedergabedatenstroms am zweiten Wiedergabegerät in Abhängigkeit der Wiedergabe-Fortschrittsinformation vorgesehen ist.

## Beschreibung

### Stand der Technik

Die Erfindung betrifft ein System zur Wiedergabe von ersten Wiedergabedaten und wenigstens zweiten Wiedergabedaten, wobei das System ein erstes Wiedergabegerät und wenigstens ein zweites Wiedergabegerät aufweist, wobei das erste Wiedergabegerät vorgesehen ist, die ersten Wiedergabedaten in einen ersten Wiedergabedatenstrom umzuwandeln und dadurch die ersten Wiedergabedaten mittels des ersten Wiedergabegeräts wiederzugeben und wobei das zweite Wiedergabegerät vorgesehen ist, die zweiten Wiedergabedaten in einen zweiten Wiedergabedatenstrom umzuwandeln und dadurch die zweiten Wiedergabedaten mittels des zweiten Wiedergabegeräts wiederzugeben.

Ferner betrifft die Erfindung ein Verfahren zur Wiedergabe von ersten Wiedergabedaten und wenigstens zweiten Wiedergabedaten, wobei ein erstes Wiedergabegerät und wenigstens ein zweites Wiedergabegerät vorgesehen ist, wobei das erste Wiedergabegerät die ersten Wiedergabedaten in einen ersten Wiedergabedatenstrom umwandelt und durch Wiedergabe des ersten Wiedergabedatenstroms die ersten Wiedergabedaten wiedergibt und wobei das zweite Wiedergabegerät die zweiten Wiedergabedaten in einen zweiten Wiedergabedatenstrom umwandelt und durch Wiedergabe des zweiten Wiedergabedatenstroms die zweiten Wiedergabedaten wiedergibt.

Beim Abspielen bzw. beim Wiedergeben von Wiedergabedaten wird oftmals ein Gerät verwendet - wie beispielsweise ein DVD-Abspielgerät im Zusammenspiel mit einem Fernsehgerät (oder einer sonstigen Anzeigeeinrichtung) bzw. ein integriertes Gerät mit einem Bildschirm und einer DVD-Abspielmöglichkeit -, welches einen Wiedergabedatenstrom in integrierter Form, d.h. in der Regel umfassend sowohl visuelle Videodaten als auch akustische Audiodaten, wiederzugeben in der Lage ist. Solche Anordnungen sind im Stand der Technik hinlänglich bekannt.

Falls jedoch die Anforderung besteht, einen gegenüber der gewöhnlichen audiovisuellen Wiedergabe (mittels beispielsweise eines Bildschirms und einem einzelnen Lautsprecher oder aber eines Bildschirms und einer Mehrzahl von Lautsprechern) von Abspieldaten bzw. Wiedergabedaten erhöhten Erlebniswert für einen Benutzer dadurch zu erzielen, dass dem Benutzer zusätzliche Informationen bzw. Erlebnisse bzw. Sinneseindrücke bereitgestellt werden, insbesondere auch über zusätzliche Geräte wie etwa Beleuchtungseinrichtungen, weitere akustische Einrichtungen oder dergleichen (wie etwa von unterschiedlichen Quellen oder über unterschiedliche Kanäle), ist es nachteilig, dass eine mangelhafte Synchronisierung bzw. mangelnde Flexibilität bzw. ein erhöhter Benutzeraufwand bei der Wiedergabe der Wiedergabedaten dadurch entsteht, dass entweder keine Synchronisierung der audiovisuellen Wiedergabedaten mit den zusätzlichen Informationen vorliegt, oder aber, dass eine solche Synchronisierung der audiovisuellen Wiedergabedaten mit den zusätzlichen Informationen schwierig zu bewerkstelligen ist und daher möglichst keine Unterbrechung der Wiedergabe erfolgen darf.

### Offenbarung der Erfindung

Der Erfindung liegt die Aufgabe zugrunde, ein System und ein Verfahren zur Wiedergabe von ersten Wiedergabedaten und wenigstens zweiten Wiedergabedaten anzugeben, wobei das System ein erstes und zweites Wiedergabegerät zur Wiedergabe von ersten und zweiten Wiedergabedaten aufweist, wobei die zweiten Wiedergabedaten hinsichtlich ihrer Wiedergabe auf die ersten Wiedergabedaten bezogen sind, jedoch die ersten und zweiten Wiedergabedaten ansonsten voneinander unabhängig sind, wobei eine möglichst einfache und flexible Einrichtung der gemeinsamen Wiedergabe der ersten und zweiten Wiedergabedaten ermöglicht wird.

Diese Aufgabe wird erfindungsgemäß gelöst durch ein System zur Wiedergabe von ersten Wiedergabedaten und wenigstens zweiten Wiedergabedaten, wobei das System ein erstes Wiedergabegerät und wenigstens ein zweites Wiedergabegerät aufweist, wobei das erste Wiedergabegerät vorgesehen ist, die ersten Wiedergabedaten in einen ersten Wiedergabedatenstrom umzuwandeln und dadurch die ersten Wiedergabedaten mittels des ersten Wiedergabegeräts wiederzugeben, wobei das zweite Wiedergabegerät vorgesehen ist, die zweiten Wiedergabedaten in einen zweiten Wiedergabedatenstrom umzuwandeln und dadurch die zweiten Wiedergabedaten mittels des zweiten Wiedergabegeräts wiederzugeben, wobei die zweiten Wiedergabedaten hinsichtlich ihrer Wiedergabe auf die ersten Wiedergabedaten bezogen sind, jedoch die ersten und zweiten Wiedergabedaten ansonsten voneinander unabhängig sind, wobei die Generierung einer mit dem Fortschritt der Wiedergabe des ersten Wiedergabedatenstroms am ersten Wiedergabegerät korrelierenden Wiedergabe-Fortschrittsinformation durch das erste Wiedergabegerät vorgesehen ist, wobei ein Empfang der Wiedergabe-Fortschrittsinformation durch das zweite Wiedergabegerät vorgesehen ist und wobei die Wiedergabe des zweiten Wiedergabedatenstroms am zweiten Wiedergabegerät in Abhängigkeit der Wiedergabe-Fortschrittsinformation vorgesehen ist.

Hierdurch ist es erfindungsgemäß vorteilhaft möglich, dass neben den insbesondere als Multimediainhalt oder als klassische audiovisuelle Daten vorgesehenen ersten Wiedergabedaten Zusatzinformationen bzw. Zusatzinhalte als zweite Wiedergabedaten in einer für den Benutzer vorteilhaften, insbesondere angenehmen oder anderweitig nutzbringenden, Weise wiedergegeben werden können, wobei die zweiten Wiedergabedaten erfindungsgemäß hinsichtlich ihrer Wiedergabe zwar auf die ersten Wiedergabedaten bezogen sind, jedoch die ersten und zweiten Wiedergabedaten ansonsten voneinander unabhängig sind.

Insbesondere bedeutet die Bezogenheit der zweiten Wiedergabedaten (bzw. der Zusatzinformationen) auf die ersten Wiedergabedaten, dass - in einer für die ersten Wiedergabedaten und einen daraus generierbaren ersten Wiedergabedatenstrom analogen Weise - aus den zweiten Wiedergabedaten ein zweiter Wiedergabedatenstrom generierbar ist, wobei der zweite Wiedergabedatenstrom sinnvollerweise bzw. zur Erhöhung des Nutzens für einen Benutzer derart bezogen auf die ersten Wiedergabedaten (bzw. den ersten Wiedergabedatenstrom) wiedergegeben werden soll, dass sich entsprechende Stellen des ersten Wiedergabedatenstroms und des zweiten Wiedergabedatenstroms entweder genau entsprechen oder aber zumindest ungefähr entsprechen, d.h. im Wesentlichen synchronisiert wiedergeben werden. Hierbei bedeutet der Begriff "im Wesentlichen synchronisiert wiedergeben", dass entweder eine perfekte Synchronisierung der Wiedergabe des ersten Wiedergabedatenstroms und des zweiten Wiedergabedatenstroms (d.h. etwa eine Abweichung der beiden Datenströme im Bereich von weniger als beispielsweise 100 Millisekunden oder besonders bevorzugt von weniger als 10 Millisekunden oder weiterhin bevorzugt von weniger als 1 Millisekunde) vorgesehen ist oder aber dass eine relativ gute Synchronisierung der Wiedergabe des ersten Wiedergabedatenstroms und des zweiten Wiedergabedatenstroms vorgesehen ist, beispielsweise eine Abweichung der beiden Datenströme
-- im Bereich von mehr als 100 Millisekunden und weniger als 10 Sekunden (oder im Bereich von 100 Millisekunden bis 10 Sekunden) oder, besonders bevorzugt,
-- im Bereich von mehr als 500 Millisekunden und weniger als 5 Sekunden (oder im Bereich von 500 Millisekunden bis 5 Sekunden) oder, weiterhin bevorzugt,
-- im Bereich von mehr als einer Sekunde und weniger als 2 Sekunden (oder im Bereich von einer Sekunde bis 2 Sekunden).

Zur synchronisierten Wiedergabe der ersten und zweiten Wiedergabedaten ist es erfindungsgemäß vorgesehen, dass die Generierung einer mit dem Fortschritt der Wiedergabe des ersten Wiedergabedatenstroms am ersten Wiedergabegerät korrelierenden Wiedergabe-Fortschrittsinformation durch das erste Wiedergabegerät vorgesehen ist. Eine solche Wiedergabe-Fortschrittsinformation ist erfindungsgemäß beispielsweise als ein Signal etwa im Sinne eines Taktsignals vorgesehen, welches kontinuierlich im zeitlichen Abstand eines vorgegebenen Zeitintervalls (bezogen auf die Wiedergabe des ersten Wiedergabedatenstroms am ersten Wiedergabegerät) erzeugt bzw. generiert bzw. ausgesandt wird. Alternativ oder kumulativ zu einer solchen (frequenzmäßig gleichen bzw. konstanten) Ausbildung der Wiedergabe-Fortschrittsinformation kann es erfindungsgemäß auch vorgesehen sein, dass die Wiedergabe-Fortschrittsinformation eine Information umfasst, die an den ersten Wiedergabedatenstrom beispielsweise in der Form adaptiert ist, dass die Wiedergabe-Fortschrittsinformation, bzw. ein Teil davon, in ungleichmäßigen Zeitintervallen ausgesandt wird. Ferner ist es alternativ oder kumulativ zu einer der eben beschriebenen Ausbildungen der Wiedergabe-Fortschrittsinformation erfindungsgemäß auch vorgesehen, dass die Wiedergabe-Fortschrittsinformation eine Information umfasst, die an den ersten Wiedergabedatenstrom beispielsweise in der Form adaptiert ist, dass die Wiedergabe-Fortschrittsinformation in der Form einer Vorabinformation bezogen auf einen zukünftigen Zeitpunkt innerhalb der Wiedergabe der ersten Wiedergabedaten bzw. innerhalb des ersten Wiedergabedatenstroms (beispielsweise "in 10 Sekunden" oder aber "in 5 Sekunden") vorgesehen ist.

Erfindungsgemäß ist es vorgesehen, dass der Empfang der Wiedergabe-Fortschrittsinformation durch das zweite Wiedergabegerät erfolgt und die Wiedergabe des zweiten Wiedergabedatenstroms am zweiten Wiedergabegerät in Abhängigkeit der Wiedergabe-Fortschrittsinformation vorgesehen ist.

Hierdurch ist es erfindungsgemäß vorteilhaft möglich, dass mit relativ geringem Aufwand eine synchronisierte oder zumindest eine quasisynchronisierte Wiedergabe sowohl der ersten Wiedergabedaten (bzw. des ersten Wiedergabedatenstroms) durch das erste Wiedergabegerät als auch der zweiten Wiedergabedaten (bzw. des zweiten Wiedergabedatenstroms) durch das zweite Wiedergabegerät realisierbar ist. Ferner ist es hierdurch erfindungsgemäß in besonders vorteilhafter Weise möglich, dass es für einen Benutzer nicht erforderlich ist - insbesondere nicht während des Verlaufs einer (einmal begonnenen) Wiedergabe der ersten (und synchronisiert oder quasisynchronisiert dazu der zweiten) Wiedergabedaten -, das zweite Wiedergabegerät (bzw. die Wiedergabe der zweiten Wiedergabedaten) - separat zur Steuerung des ersten Wiedergabegeräts (etwa mittels einer Fernbedienungseinrichtung) oder zur Steuerung der Servereinrichtung (etwa gleichfalls mittels einer Fernbedienungseinrichtung) - zu steuern. Dies ist insbesondere für solche Fälle von besonderem Vorteil, bei denen eine einmal begonnene Wiedergabe (der ersten Wiedergabedaten und in Folge davon auch der zweiten Wiedergabedaten) entweder für einen gewissen Zeitraum unterbrochen werden soll oder aber bei denen eine einmal begonnen Wiedergabe (der ersten Wiedergabedaten und in Folge davon auch der zweiten Wiedergabedaten) dahin gehend geändert werden soll, dass innerhalb der Wiedergabe entweder direkt nach vorne (d.h. direkt zu einem zukünftigen Zeitpunkt) oder nach hinten (d.h. zu einem zurückliegenden Zeitpunkt) gesprungen werden soll, etwa zum Überspringen von Werbeblöcken oder aber zur Wiederholung bestimmter Szenen.

Erfindungsgemäß ist es bevorzugt vorgesehen, dass eine direkte Übertragung der Wiedergabe-Fortschrittsinformation vom ersten Wiedergabegerät zum zweiten Wiedergabegerät vorgesehen ist.

Es ist hierdurch erfindungsgemäß in besonders vorteilhafter Weise möglich, dass ein unmittelbarer Informationsaustausch zwischen dem ersten Wiedergabegerät und dem zweiten Wiedergabegerät möglich ist und damit auch der erforderliche Aufwand für die Übermittlung der Wiedergabe-Fortschrittsinformation vergleichsweise gering gehalten werden kann.

Besonders bevorzugt ist es gemäß der vorliegenden Erfindung ferner, dass das System eine Servereinrichtung aufweist, wobei eine Übertragung der Wiedergabe-Fortschrittsinformation vom ersten Wiedergabegerät zur Servereinrichtung und von der Servereinrichtung zum zweiten Wiedergabegerät vorgesehen ist.

Es ist hierdurch erfindungsgemäß in besonders vorteilhafter Weise möglich, dass der Informationsaustausch zwischen dem ersten Wiedergabegerät und dem zweiten Wiedergabegerät über die Servereinrichtung erfolgt, so dass es mit besonderem Vorteil möglich ist, dass neben dem zweiten Wiedergabegerät auch ein weiteres Wiedergabegerät oder mehrere weitere Wiedergabegeräte (beispielsweise ein drittes Wiedergabegerät und/oder ein viertes Wiedergabegerät) mit der Wiedergabe-Fortschrittsinformation versorgt werden kann, ohne dass das erste Wiedergabegerät die Verwaltung bzw. die Steuerung der Verteilung der Wiedergabe-Fortschrittsinformation an die Mehrzahl von weiteren Wiedergabegeräten außer dem ersten Wiedergabegerät (d.h. die Steuerung der Verteilung der Wiedergabe-Fortschrittsinformation an das zweite, dritte, etc. Wiedergabegerät) übernehmen müsste.

Die Übertragung der Wiedergabe-Fortschrittsinformation findet erfindungsgemäß beispielsweise mittels einer kurzreichweitigen Funkverbindung statt, beispielsweise über eine Bluetooth-Übertragung und/oder WLAN-Übertragung zwischen dem ersten Wiedergabegerät und dem zweiten Wiedergabegerät (bei einer direkten Übertragung der Wiedergabe-Fortschrittsinformation) bzw. zwischen dem ersten Wiedergabegerät und der Servereinrichtung einerseits und der Servereinrichtung und dem zweiten Wiedergabegerät andererseits (bei einer Übertragung der Wiedergabe-Fortschrittsinformation vom ersten Wiedergabegerät zum zweiten Wiedergabegerät über die Servereinrichtung). Alternativ zu einer Übertragung der Wiedergabe-Fortschrittsinformation mittels einer kurzreichweitigen Funkverbindung ist es erfindungsgemäß auch möglich eine Infrarot-Verbindung zu verwenden (wobei dann allerdings eine direkte Sichtverbindung zwischen Kommunikationspartnern bestehen muss) oder aber eine Lichtsteuerung (beispielsweise mittels LED-Impulsen) zu verwenden.

Es ist erfindungsgemäß ferner bevorzugt vorgesehen, dass das System eine Servereinrichtung aufweist, wobei
-- die Servereinrichtung zur Übertragung der ersten Wiedergabedaten an das erste Wiedergabegerät und zur Übertragung der zweiten Wiedergabedaten an das zweite Wiedergabegerät vorgesehen ist, oder wobei
-- die Servereinrichtung lediglich zur Übertragung der ersten Wiedergabedaten an das erste Wiedergabegerät vorgesehen ist und die zweiten Wiedergabedaten am zweiten Wiedergabegerät lokal vorliegen, oder wobei
-- die Servereinrichtung lediglich zur Übertragung der zweiten Wiedergabedaten an das zweite Wiedergabegerät vorgesehen ist und die ersten Wiedergabedaten am ersten Wiedergabegerät lokal vorliegen.

Hierdurch ist eine besonders flexible und an verschiedene Benutzerbedürfnisse bzw. an verschiedene Konfigurationen, etwa der Einrichtung eines Benutzers, angepasste Realisierung der vorliegenden Erfindung möglich.

Insbesondere ist es erfindungsgemäß bevorzugt vorgesehen, dass die zweiten Wiedergabedaten in gegenüber den ersten Wiedergabedaten unsynchronisierter Weise vorliegende Daten sind bzw. dass die zweiten Wiedergabedaten in von den ersten Wiedergabedaten getrennter, nichtsynchronisierter Form gespeichert sind.

Beispielsweise kann es vorgesehen sein, dass die ersten Wiedergabedaten als audiovisuelle Daten oder als Multimediadaten in statischer Form vorliegen- beispielsweise in Form von auf einem optischen Speichermedium, etwa auf einer DVD oder einer BD (Blue-ray Disk), gespeicherter Daten oder aber auch als Datei auf einer Festplatte oder einem tragbaren Datenträger in Form eines USB-Speichers - und dass die zweiten Wiedergabedaten ebenfalls in statischer Form - jedoch getrennt (bzw. unabhängig) und unsynchronisiert bezogen auf die ersten Wiedergabedaten vorliegen, beispielsweise als Datei auf einer Festplatte oder einem tragbaren Datenträger in Form eines USB-Speichers oder aber auf einem optischen Speichermedium.

Alternativ dazu kann es erfindungsgemäß auch vorgesehen sein, dass die ersten Wiedergabedaten als audiovisuelle Daten oder als Multimediadaten in statischer Form vorliegen - beispielsweise in Form von auf einem optischen Speichermedium gespeicherter Daten oder aber auch als Datei auf einer Festplatte oder einem tragbaren Datenträger - und dass die zweiten Wiedergabedaten in dynamischer Form - jedoch getrennt (bzw. unabhängig) und unsynchronisiert bezogen auf die ersten Wiedergabedaten - vorliegen bzw. empfangen werden, beispielsweise über eine Internetverbindung, die an der Servereinrichtung vorgesehen ist oder aber die am zweiten Wiedergabegerät vorgesehen ist.

Alternativ dazu kann es erfindungsgemäß auch umgekehrt vorgesehen sein, nämlich dass die zweiten Wiedergabedaten als audiovisuelle Daten oder als Multimediadaten in statischer Form -jedoch getrennt (bzw. unabhängig) und unsynchronisiert bezogen auf die ersten Wiedergabedaten - vorliegen - beispielsweise in Form von auf einem optischen Speichermedium gespeicherter Daten oder aber auch als Datei auf einer Festplatte oder einem tragbaren Datenträger - und dass die ersten Wiedergabedaten in dynamischer Form vorliegen bzw. empfangen werden, beispielsweise über eine Internetverbindung, die an der Servereinrichtung vorgesehen ist oder aber die am ersten Wiedergabegerät vorgesehen ist.

Erfindungsgemäß ist es weiterhin bevorzugt vorgesehen, dass die ersten Wiedergabedaten Video-Daten oder Audio-Video-Daten umfassen und dass die zweiten Wiedergabedaten zu den ersten Wiedergabedaten korrespondierende Audio-Daten oder zu den ersten Wiedergabedaten korrespondierende Multimedia-Daten sind.

Hierdurch ist es erfindungsgemäß vorteilhaft möglich, dass bei der Wiedergabe der ersten und zweiten Wiedergabegerät Zusatznutzen für einen Benutzer der Wiedergabe generiert wird. Erfindungsgemäß ist es beispielsweise vorgesehen, dass die zweiten Wiedergabedaten als Zusatzdaten bzw. Zusatzinformation bezogen auf die ersten Wiedergabedaten vorgesehen sind, beispielsweise als besonderes Audioereignisse, die an bestimmten Stellen einer (den ersten Wiedergabedaten entsprechenden) Filmdarbietung erfolgt, beispielsweise zur Untermalung einer besonders spannenden Szene, beispielsweise ein Gewitter oder dergleichen, wobei im Zeitpunkt beispielsweise eines Donners oder eines Blitzschlags ein akustisches oder ein visuelles Ereignis oder in anderer Weise für den Benutzer wahrnehmbares Ereignis erzeugt wird, beispielsweise die Ansteuerung eines speziellen Lautsprechers oder aber die Ansteuerung einer speziellen Beleuchtungseinrichtung, etwa der Außenbeleuchtung eines Hauses oder dergleichen. Alternativ dazu ist es erfindungsgemäß insbesondere vorgesehen, dass zusätzliche Audioinhalte und/oder Videoinhalte, wie etwa die Sprachsynchronisation eines Spielfilms in einer weiteren Sprache (die nicht Teil der mitgelieferten Sprachauswahl der DVD des Spielfilms ist) oder die Sprachsynchronisation eines Spielfilms in einer anderen Sprache als diejenige, die mittels des ersten Wiedergabegeräts dem Benutzer bereitgestellt bzw. wiedergegeben wird. Erfindungsgemäß ist es ferner beispielsweise möglich und bevorzugt, beim Abspielen eines Spielfilms verschiedene Untertitel auf unterschiedlichen Geräten anzuzeigen. Ferner könnte eine Musikübertragung in mehreren Räumen eines Hauses erfolgen.

Ein weiterer Gegenstand der vorliegenden Erfindung ist ein Verfahren zur Wiedergabe von ersten Wiedergabedaten und wenigstens zweiten Wiedergabedaten, wobei ein erstes Wiedergabegerät und wenigstens ein zweites Wiedergabegerät vorgesehen ist, wobei das erste Wiedergabegerät die ersten Wiedergabedaten in einen ersten Wiedergabedatenstrom umwandelt und durch Wiedergabe des ersten Wiedergabedatenstroms die ersten Wiedergabedaten wiedergibt, wobei das zweite Wiedergabegerät die zweiten Wiedergabedaten in einen zweiten Wiedergabedatenstrom umwandelt und durch Wiedergabe des zweiten Wiedergabedatenstroms die zweiten Wiedergabedaten wiedergibt, wobei die zweiten Wiedergabedaten hinsichtlich ihrer Wiedergabe auf die ersten Wiedergabedaten bezogen sind, jedoch die ersten und zweiten Wiedergabedaten ansonsten voneinander unabhängig sind, wobei das erste Wiedergabegerät eine Wiedergabe-Fortschrittsinformation generiert, die mit dem Fortschritt der Wiedergabe des ersten Wiedergabedatenstroms am ersten Wiedergabegerät korreliert, wobei das erste Wiedergabegerät die Wiedergabe-Fortschrittsinformation überträgt, wobei die Wiedergabe-Fortschrittsinformation zum Empfang durch das zweite Wiedergabegerät vorgesehen ist und wobei der zweite Wiedergabedatenstrom am zweiten Wiedergabegerät in Abhängigkeit der Wiedergabe-Fortschrittsinformation wiedergegeben wird.

Hierdurch ist es erfindungsgemäß vorteilhaft möglich, dass neben den ersten Wiedergabedaten, die insbesondere als Multimediainhalt oder als klassische audiovisuelle Daten vorgesehen sind, die zweiten Wiedergabedaten als Zusatzinformationen bzw. Zusatzinhalte dem Benutzer zur Verfügung gestellt werden können, wobei die zweiten Wiedergabedaten hinsichtlich ihrer Wiedergabe auf die ersten Wiedergabedaten bezogen sind, jedoch die ersten und zweiten Wiedergabedaten voneinander unabhängig sind.

Bevorzugt ist es erfindungsgemäß vorgesehen, dass die Wiedergabe-Fortschrittsinformation vom ersten Wiedergabegerät zum zweiten Wiedergabegerät direkt übertragen wird.

Weiterhin ist es erfindungsgemäß bevorzugt vorgesehen, dass eine Servereinrichtung vorgesehen ist, wobei die Wiedergabe-Fortschrittsinformation vom ersten Wiedergabegerät zur Servereinrichtung und von der Servereinrichtung zum zweiten Wiedergabegerät übertragen wird.

Ferner ist es auch bevorzugt vorgesehen, dass eine Servereinrichtung vorgesehen ist, wobei
-- die ersten Wiedergabedaten von der Servereinrichtung an das erste Wiedergabegerät und der zweiten Wiedergabedaten von der Servereinrichtung an das zweite Wiedergabegerät übertragen werden, oder wobei
-- lediglich die ersten Wiedergabedaten von der Servereinrichtung an das erste Wiedergabegerät übertagen werden und die zweiten Wiedergabedaten am zweiten Wiedergabegerät lokal vorliegen, oder wobei
-- lediglich die zweiten Wiedergabedaten von der Servereinrichtung an das zweite Wiedergabegerät übertagen werden und die ersten Wiedergabedaten am ersten Wiedergabegerät lokal vorliegen.

Weiterhin ist es erfindungsgemäß bevorzugt vorgesehen, dass die zweiten Wiedergabedaten in gegenüber den ersten Wiedergabedaten unsynchronisierter Weise vorliegen bzw. dass die zweiten Wiedergabedaten in von den ersten Wiedergabedaten getrennter, nichtsynchronisierter Form gespeichert werden.

Ferner bezieht sich die vorliegende Erfindung auch auf ein Computerprogramm mit Programmcodemitteln, mit deren Hilfe alle Schritte des erfindungsgemäßen Verfahrens durchführbar sind, wenn das Computerprogramm auf einem programmierbaren elektrischen Gerät bzw. einer Komponente des Systems ausgeführt wird.

Weiterhin ist Gegenstand der vorliegenden Erfindung ein Computerprogrammprodukt mit einem computerlesbaren Medium und einem auf dem computerlesbaren Medium gespeicherten Computerprogramm mit Programmcodemitteln, die dazu geeignet sind, dass alle Schritte des erfindungsgemäßen Verfahrens durchführbar sind, wenn das Computerprogramm auf einem programmierbaren elektrischen Gerät bzw. einer Komponente des Systems ausgeführt wird.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt eine schematische Ansicht eines erfindungsgemäßen Systems mit einem ersten und zweiten Wiedergabegerät gemäß einer ersten Ausführungsform.
- **Figur 2**: zeigt eine schematische Ansicht des erfindungsgemäßen Systems mit dem ersten und zweiten Wiedergabegerät gemäß einer zweiten Ausführungsform.
- **Figur 3**: zeigt eine schematische Ansicht des erfindungsgemäßen Systems mit dem ersten und zweiten Wiedergabegerät gemäß einer Variante der ersten Ausführungsform.
- **Figuren 4 und 5**: zeigen eine schematische Ansicht des erfindungsgemäßen Systems mit dem ersten und zweiten Wiedergabegerät gemäß weiterer Varianten der ersten Ausführungsform.
- **Figur 6**: zeigt eine schematische Ansicht des erfindungsgemäßen Systems mit dem ersten und zweiten Wiedergabegerät gemäß einer Variante der zweiten Ausführungsform.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

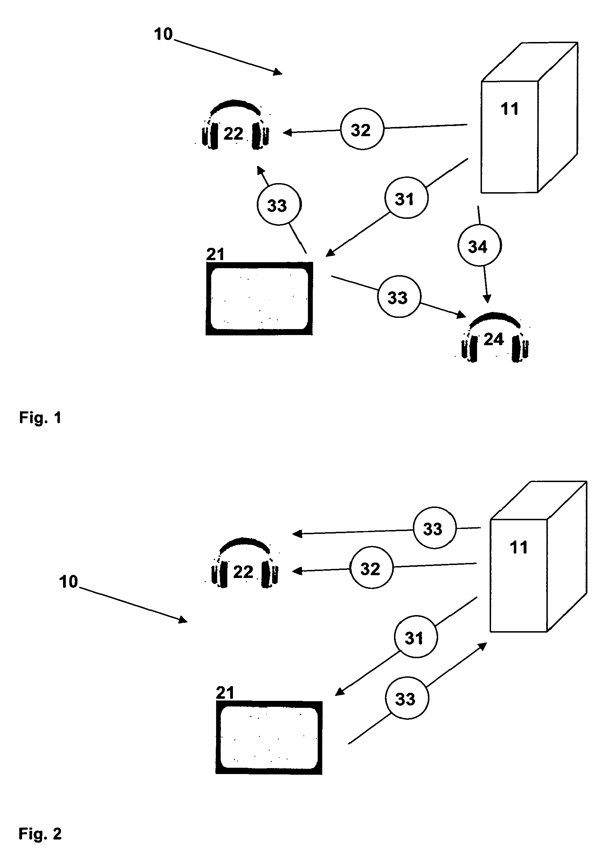

In Figur 1 ist schematisch eine Ansicht eines erfindungsgemäßen Systems 10 mit einem ersten Wiedergabegerät 21 und einem zweiten Wiedergabegerät 22 gemäß einer ersten Ausführungsform dargestellt. Im dargestellten Beispiel umfasst das System 10 ferner noch ein weiteres Wiedergabegerät 24 (beispielsweise als drittes Wiedergabegerät 24 oder als viertes Wiedergabegerät).

Weiterhin umfasst das System 10 in der in Figur 1 dargestellten Ausführungsform eine Servereinrichtung 11.

Gemäß der in Figur 1 dargestellten Ausführungsvariante der ersten Ausführungsform sind erste Wiedergabedaten 31 auf bzw. in der Servereinrichtung 11 gespeichert (bzw. werden von der Servereinrichtung 11 - etwa über eine Internetanbindung oder eine Streaminganbindung - empfangen) und werden zur Wiedergabe der ersten Wiedergabedaten 31 zum ersten Wiedergabegerät 21 hin übertragen. Ferner sind, ebenfalls auf bzw. in der Servereinrichtung 11, zweite Wiedergabedaten 32 gespeichert (bzw. werden von der Servereinrichtung 11 - etwa über eine Internetanbindung oder eine Streaminganbindung - empfangen) und werden zur Wiedergabe der zweiten Wiedergabedaten 32 zum zweiten Wiedergabegerät 22 hin übertragen. Im in der Figur 1 dargestellten Beispiel sind ferner, ebenfalls auf bzw. in der Servereinrichtung 11, weitere Wiedergabedaten 34 gespeichert (bzw. werden von der Servereinrichtung 11 - etwa über eine Internetanbindung oder eine Streaminganbindung - empfangen) und werden zur Wiedergabe der weiteren Wiedergabedaten 34 zum weiteren Wiedergabegerät 24 hin übertragen.

Zur Synchronisierung
-- der Wiedergabe der ersten Wiedergabedaten 31 (bzw. des daraus durch das erste Wiedergabegerät 21 erzeugten ersten Wiedergabedatenstroms) mit
-- der Wiedergabe der zweiten Wiedergabedaten 32 (bzw. des daraus durch das zweiteb Wiedergabegerät 22 erzeugten zweiten Wiedergabedatenstroms) und im dargestellten Beispiel der Figur 1 auch der weiteren Wiedergabedaten 34 (bzw. des daraus durch das weitere Wiedergabegerät 24 erzeugten weitern Wiedergabedatenstroms)
wird durch das erste Wiedergabegerät 21 eine Wiedergabe-Fortschrittsinformation 33 generiert, die mit der Widergabe der ersten Wiedergabedaten 31 am ersten Wiedergabegerät 21 korreliert.

Bei der ersten Ausführungsform ist es erfindungsgemäß vorgesehen, dass die Wiedergabe-Fortschrittsinformation 33 direkt vom ersten Wiedergabegerät 21 zum zweiten Wiedergabegerät 22 (bzw. zusätzlich auch zu einem weiteren Wiedergabegerät 24) übertragen wird. Diese Übertragung findet erfindungsgemäß beispielsweise mittels einer kurzreichweitigen Funkverbindung (etwa einer Bluetooth-Verbindung oder einer WLAN-Vebindung) statt oder auch mittels einer Infrarot-Verbindung bzw. über eine drahtgebundene Verbindung statt.

In Figur 2 ist schematisch eine Ansicht des erfindungsgemäßen Systems 10 mit ebenfalls dem ersten Wiedergabegerät 21 und dem zweiten Wiedergabegerät 22 gemäß einer zweiten Ausführungsform dargestellt. Gleichfalls umfasst das System 10 auch gemäß der zweiten Ausführungsform in Figur 2 eine Servereinrichtung 11.

Gemäß der in Figur 2 dargestellten Ausführungsvariante der zweiten Ausführungsform sind ebenfalls die ersten Wiedergabedaten 31 auf bzw. in der Servereinrichtung 11 gespeichert (bzw. werden von der Servereinrichtung 11 - etwa über eine Internetanbindung oder eine Streaminganbindung - empfangen) und werden zur Wiedergabe der ersten Wiedergabedaten 31 zum ersten Wiedergabegerät 21 hin übertragen. Ferner sind, ebenfalls auf bzw. in der Servereinrichtung 11, die zweiten Wiedergabedaten 32 gespeichert (bzw. werden von der Servereinrichtung 11 - etwa über eine Internetanbindung oder eine Streaminganbindung - empfangen) und werden zur Wiedergabe der zweiten Wiedergabedaten 32 zum zweiten Wiedergabegerät 22 hin übertragen.

Bei der zweiten Ausführungsform ist es erfindungsgemäß vorgesehen, dass die Wiedergabe-Fortschrittsinformation 33 nicht direkt vom ersten Wiedergabegerät 21 zum zweiten Wiedergabegerät 22 (wie bei der in Figur 1 dargestellten Ausführungsform) übertragen wird, sondern über bzw. mittels der Servereinrichtung 11 zwischen dem ersten Wiedergabegerät 21 und dem zweiten Wiedergabegerät 22 übertragen wird, d.h. es wird die Wiedergabe-Fortschrittsinformation 33 zunächst vom ersten Wiedergabegerät 21 zur Servereinrichtung 11 übertragen und anschließend wird die Wiedergabe-Fortschrittsinformation 33 von der Servereinrichtung 11 zum zweiten Wiedergabegerät 22 übertragen. Wenigstens eine dieser Übertragungen findet erfindungsgemäß insbesondere mittels einer kurzreichweitigen Funkverbindung (etwa einer Bluetooth-Verbindung oder einer WLAN-Vebindung) statt oder auch mittels einer Infrarot-Verbindung; eine dieser Verbindungen kann auch drahtgebunden vorgesehen sein. Es ist jedoch erfindungsgemäß vorgesehen, dass beide dieser Übertragungen (d.h. sowohl vom ersten Wiedergabegerät 21 zur Servereinrichtung 11 als auch von der Servereinrichtung 11 zum zweiten Wiedergabegerät 22) mittels einer kurzreichweitigen Funkverbindung stattfindet oder auch mittels einer Infrarot-Verbindung bzw. über eine drahtgebundene Verbindung stattfinden.

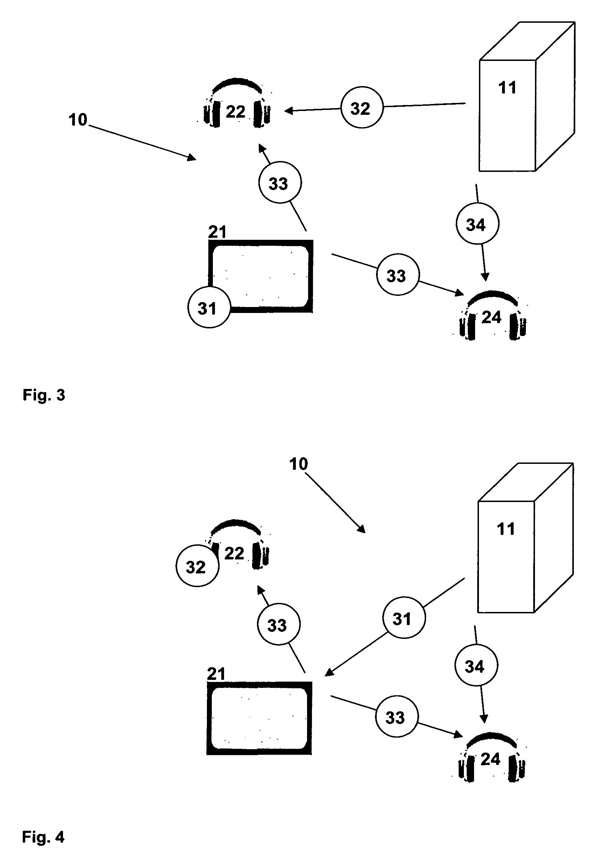

In Figur 3 ist eine schematische Ansicht des erfindungsgemäßen Systems 10 mit dem ersten und zweiten Wiedergabegerät 21, 22 gemäß einer Variante der ersten Ausführungsform dargestellt. Hierbei wird wiederum die Wiedergabe-Fortschrittsinformation 33 direkt zwischen dem ersten Wiedergabegerät 21 und dem zweiten Wiedergabegerät 22 (bzw. zusätzlich auch direkt zwischen dem ersten Wiedergabegerät 21 und dem weiteren Wiedergabegerät 24) übertragen. Im Gegensatz zu der in der Figur 1 dargestellten Variante der ersten Ausführungsform ist es jedoch bei der Variante gemäß der Figur 3 vorgesehen, dass die ersten Wiedergabedaten 31 lokal beim ersten Wiedergabegerät 21 gespeichert sind bzw. vom ersten Wiedergabegerät 21 direkt (beispielsweise über eine Internetverbindung) empfangen werden und nicht über die Servereinrichtung 11 bereitgestellt werden. Demgegenüber sind bei der in Figur 3 dargestellten Variante der ersten Ausführungsform - in zur Darstellung gemäß der Figur 1 analoger Weise - die zweiten Wiedergabedaten 32 auf bzw. in der Servereinrichtung 11 gespeichert (bzw. werden von der Servereinrichtung 11 - etwa über eine Internetanbindung oder eine Streaminganbindung - empfangen) und werden zur Wiedergabe der zweiten Wiedergabedaten 32 zum zweiten Wiedergabegerät 22 hin übertragen. Entsprechend sind auch die weiteren Wiedergabedaten 34 auf bzw. in der Servereinrichtung 11 gespeichert (bzw. werden von der Servereinrichtung 11 - etwa über eine Internetanbindung oder eine Streaminganbindung - empfangen) und werden zur Wiedergabe der weiteren Wiedergabedaten 34 zum weiteren Wiedergabegerät 24 hin übertragen.

In Figur 4 ist eine schematische Ansicht des erfindungsgemäßen Systems 10 mit dem ersten und zweiten Wiedergabegerät 21, 22 gemäß einer weiteren Variante der ersten Ausführungsform dargestellt. Hierbei wird wiederum die Wiedergabe-Fortschrittsinformation 33 direkt zwischen dem ersten Wiedergabegerät 21 und dem zweiten Wiedergabegerät 22 (bzw. zusätzlich auch direkt zwischen dem ersten Wiedergabegerät 21 und dem weiteren Wiedergabegerät 24) übertragen. Im Gegensatz zu den in den Figuren 1 und 3 dargestellten Varianten der ersten Ausführungsform ist es jedoch bei der Variante gemäß der Figur 4 vorgesehen, dass die zweiten Wiedergabedaten 32 lokal beim zweiten Wiedergabegerät 22 gespeichert sind bzw. vom zweiten Wiedergabegerät 22 direkt (beispielsweise über eine Internetverbindung) empfangen werden und nicht über die Servereinrichtung 11 bereitgestellt werden. Demgegenüber sind bei der in Figur 4 dargestellten Variante der ersten Ausführungsform - in zur Darstellung gemäß der Figur 1 analoger Weise - die ersten Wiedergabedaten 31 auf bzw. in der Servereinrichtung 11 gespeichert (bzw. werden von der Servereinrichtung 11 - etwa über eine Internetanbindung oder eine Streaminganbindung - empfangen) und werden zur Wiedergabe der ersten Wiedergabedaten 31 zum ersten Wiedergabegerät 21 hin übertragen. Entsprechend sind auch - in zu den Darstellungen gemäß der Figuren 1 und 3 analoger Weise - die weiteren Wiedergabedaten 34 auf bzw. in der Servereinrichtung 11 gespeichert (bzw. werden von der Servereinrichtung 11 - etwa über eine Internetanbindung oder eine Streaminganbindung - empfangen) und werden zur Wiedergabe der weiteren Wiedergabedaten 34 zum weiteren Wiedergabegerät 24 hin übertragen.

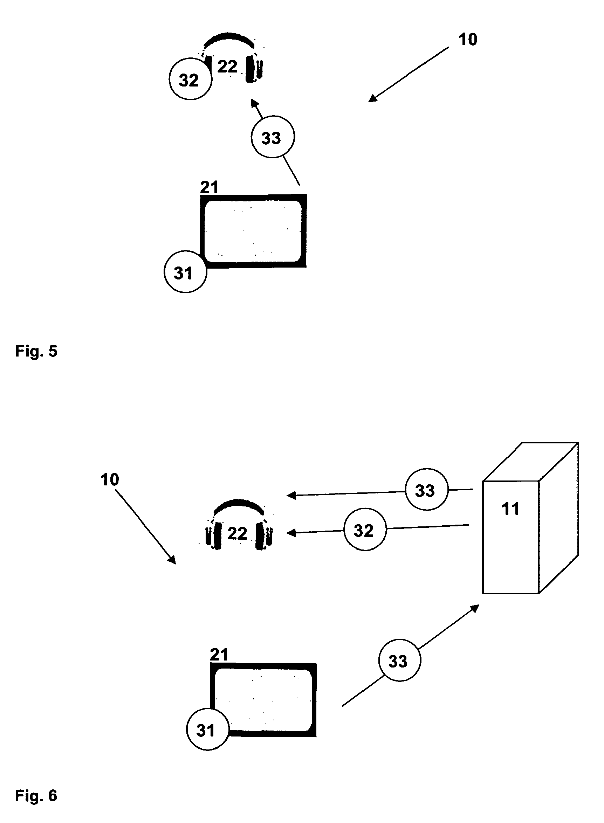

In Figur 5 ist eine schematische Ansicht des erfindungsgemäßen Systems 10 mit dem ersten und zweiten Wiedergabegerät 21, 22 gemäß noch einer weiteren Variante der ersten Ausführungsform dargestellt. Hierbei wird wiederum die Wiedergabe-Fortschrittsinformation 33 direkt zwischen dem ersten Wiedergabegerät 21 und dem zweiten Wiedergabegerät 22 übertragen. Im Gegensatz zu den in den Figuren 1, 3 und 4 dargestellten Varianten der ersten Ausführungsform ist es jedoch bei der Variante gemäß der Figur 5 vorgesehen, dass
-- sowohl die ersten Wiedergabedaten 31 lokal beim ersten Wiedergabegerät 21 gespeichert sind bzw. vom ersten Wiedergabegerät 21 direkt (beispielsweise über eine Internetverbindung) empfangen werden und nicht über eine Servereinrichtung 11 bereitgestellt werden
-- als auch die zweiten Wiedergabedaten 32 lokal beim zweiten Wiedergabegerät 22 gespeichert sind bzw. vom zweiten Wiedergabegerät 22 direkt (beispielsweise über eine Internetverbindung) empfangen werden und nicht über eine Servereinrichtung 11 bereitgestellt werden,
so dass eine Servereinrichtung 11 bei dieser Variante der ersten Ausführungsform nicht zwingend erforderlich ist.

In Figur 6 ist eine schematische Ansicht des erfindungsgemäßen Systems 10 mit dem ersten und zweiten Wiedergabegerät 21, 22 gemäß einer Variante der zweiten Ausführungsform dargestellt. Gleichfalls umfasst das System 10 zwingend auch gemäß dieser Variante der zweiten Ausführungsform eine Servereinrichtung 11. Im Gegensatz zu der in der Figur 2 dargestellten Variante der zweiten Ausführungsform ist es jedoch bei der Variante gemäß der Figur 6 vorgesehen, dass die ersten Wiedergabedaten 31 lokal beim ersten Wiedergabegerät 21 gespeichert sind bzw. vom ersten Wiedergabegerät 21 direkt (beispielsweise über eine Internetverbindung) empfangen werden und nicht über die Servereinrichtung 11 bereitgestellt werden. Demgegenüber sind bei der in Figur 6 dargestellten Variante der zweiten Ausführungsform - in zur Darstellung gemäß der Figur 2 analoger Weise - die zweiten Wiedergabedaten 32 auf bzw. in der Servereinrichtung 11 gespeichert (bzw. werden von der Servereinrichtung 11 - etwa über eine Internetanbindung oder eine Streaminganbindung - empfangen) und werden zur Wiedergabe der zweiten Wiedergabedaten 32 zum zweiten Wiedergabegerät 22 hin übertragen.

Wiederum ist es vorgesehen, dass die Wiedergabe-Fortschrittsinformation 33 nicht direkt vom ersten Wiedergabegerät 21 zum zweiten Wiedergabegerät 22 (wie bei den verschiedenen Varianten der ersten Ausführungsform gemäß der Figuren 1, 3, 4 und 5) übertragen wird, sondern über bzw. mittels der Servereinrichtung 11 zwischen dem ersten Wiedergabegerät 21 und dem zweiten Wiedergabegerät 22 übertragen wird, d.h. es wird die Wiedergabe-Fortschrittsinformation 33 zunächst vom ersten Wiedergabegerät 21 zur Servereinrichtung 11 übertragen und anschließend wird die Wiedergabe-Fortschrittsinformation 33 von der Servereinrichtung 11 zum zweiten Wiedergabegerät 22 übertragen. Wenigstens eine dieser Übertragungen findet erfindungsgemäß insbesondere mittels einer kurzreichweitigen Funkverbindung (etwa einer Bluetooth-Verbindung oder einer WLAN-Vebindung) statt oder auch mittels einer Infrarot-Verbindung; eine dieser Verbindungen kann auch drahtgebunden vorgesehen sein. Es ist jedoch erfindungsgemäß vorgesehen, dass beide dieser Übertagungen (d.h. sowohl vom ersten Wiedergabegerät 21 zur Servereinrichtung 11 als auch von der Servereinrichtung 11 zum zweiten Wiedergabegerät 22) mittels einer kurzreichweitigen Funkverbindung stattfindet oder auch mittels einer Infrarot-Verbindung.

Gemäß der vorliegenden Erfindung ist es sowohl gemäß der ersten Ausführungsform als auch gemäß der zweiten Ausführungsform möglich, dass ein erstes Wiedergabegerät 21, insbesondere als ein streaming-fähiger Medien-Empfänger (Media Receiver), der Servereinrichtung 11 (auch als Streamingserver 11 bezeichnet) bzw. anderen Wiedergabegeräten 22, 24 (auch als Streamingclients 22, 24 bezeichnet) mitteilen kann, an welcher Stelle der Wiedergabe (bzw. des Datenstroms bzw. Daten-Streams) sich der Nutzer (d.h. die Wiedergabe am ersten Wiedergabegerät 21) gerade befindet, insbesondere mit Hilfe einer Wiedergabe-Fortschrittsinformation (auch als Indexparameter bezeichnet) wie beispielsweise einer Zeitinformation, eines Rahmenzählers (Frame Counter), eines Szenenzählers (Scene Counter) oder dergleichen. Diese Informationen können erfindungsgemäß dann genutzt werden, um Wiedergabedatenströme auf verschiedenen Wiedergabegeräten 21, 22, 24 (oder auch auf dem gleichen Gerät) abzuspielen, beispielsweise auch in Form von interaktiven Inhalten.

Erfindungsgemäß ist es ferner in vorteilhafter Weise möglich, eine definierte Verzögerung von Wiedergabedatenströmen festzulegen, damit beispielsweise Latenzzeiten ausgeglichen werden können oder der Wiedergabedatenstrom entsprechend verzögert abgespielt werden kann. Eine solche Verzögerung kann direkt auf der Servereinrichtung 11 erfolgen oder durch eine angepasste Rückmeldung der Wiedergabe-Fortschrittsinformation 33 bzw. des Indexparameters 33 an die Servereinrichtung 11. Hierdurch ist es erfindungsgemäß vorteilhaft möglich, dass Wiedergabedatenströme zeitlich beliebig verschoben (bzw. relativverschoben) werden können.

Die Wiedergabe-Fortschrittsinformation kann erfindungsgemäß dazu genutzt werden, um Ereignisse (nachfolgend auch als Events bezeichnet) auszulösen. So ist es erfindungsgemäß vorteilhaft möglich, auf der Basis der Wiedergabe-Fortschrittsinformation 33 an der Servereinrichtung 11 oder am zweiten oder weiteren Wiedergabegerät 22, 24 Ereignisse auszulösen, ohne einen durchgängigen Wiedergabedatenstrom zu verarbeiten - beispielsweise ist es erfindungsgemäß vorteilhaft möglich, dass zu einem bestimmten Zeitpunkt ein Mobiltelefon läuten oder vibrieren soll, da im parallel wiedergegebenen Film gerade ein Telefon läutet.

## Patentansprüche

1. System (10) zur Wiedergabe von ersten Wiedergabedaten (31) und wenigstens zweiten Wiedergabedaten (32), wobei das System (10) ein erstes Wiedergabegerät (21) und wenigstens ein zweites Wiedergabegerät (22) aufweist, wobei das erste Wiedergabegerät (21) vorgesehen ist, die ersten Wiedergabedaten (31) in einen ersten Wiedergabedatenstrom umzuwandeln und dadurch die ersten Wiedergabedaten (31) mittels des ersten Wiedergabegeräts (21) wiederzugeben, wobei das zweite Wiedergabegerät (22) vorgesehen ist, die zweiten Wiedergabedaten (32) in einen zweiten Wiedergabedatenstrom umzuwandeln und dadurch die zweiten Wiedergabedaten (32) mittels des zweiten Wiedergabegeräts (22) wiederzugeben, wobei die zweiten Wiedergabedaten (32) hinsichtlich ihrer Wiedergabe auf die ersten Wiedergabedaten (31) bezogen sind, jedoch die ersten und zweiten Wiedergabedaten (31, 32) ansonsten voneinander unabhängig sind, wobei die Generierung einer mit dem Fortschritt der Wiedergabe des ersten Wiedergabedatenstroms am ersten Wiedergabegerät (21) korrelierenden Wiedergabe-Fortschrittsinformation (33) durch das erste Wiedergabegerät (21) vorgesehen ist, wobei ein Empfang der Wiedergabe-Fortschrittsinformation (33) durch das zweite Wiedergabegerät (22) vorgesehen ist und wobei die Wiedergabe des zweiten Wiedergabedatenstroms am zweiten Wiedergabegerät (22) in Abhängigkeit der Wiedergabe-Fortschrittsinformation (33) vorgesehen ist.

2. System (10) nach Anspruch 1, **dadurch gekennzeichnet, dass** eine direkte Übertragung der Wiedergabe-Fortschrittsinformation (33) vom ersten Wiedergabegerät (21) zum zweiten Wiedergabegerät (22) vorgesehen ist.

3. System (10) nach Anspruch 1, **dadurch gekennzeichnet, dass** das System (10) eine Servereinrichtung (11) aufweist, wobei eine Übertragung der Wiedergabe-Fortschrittsinformation (33) vom ersten Wiedergabegerät (21) zur Servereinrichtung (11) und von der Servereinrichtung (11) zum zweiten Wiedergabegerät (22) vorgesehen ist.

4. System (10) nach einem der vorhergehenden Ansprüche, **dadurch gekennzeichnet, dass** das System (10) eine Servereinrichtung (11) aufweist, wobei
-- die Servereinrichtung (11) zur Übertragung der ersten Wiedergabedaten (31) an das erste Wiedergabegerät (21) und zur Übertragung der zweiten Wiedergabedaten (32) an das zweite Wiedergabegerät (22) vorgesehen ist, oder wobei
-- die Servereinrichtung (11) lediglich zur Übertragung der ersten Wiedergabedaten (31) an das erste Wiedergabegerät (21) vorgesehen ist und die zweiten Wiedergabedaten (32) am zweiten Wiedergabegerät (22) lokal vorliegen, oder wobei
-- die Servereinrichtung (11) lediglich zur Übertragung der zweiten Wiedergabedaten (32) an das zweite Wiedergabegerät (22) vorgesehen ist und die ersten Wiedergabedaten (31) am ersten Wiedergabegerät (21) lokal vorliegen.

5. System (10) nach einem der vorhergehenden Ansprüche, **dadurch gekennzeichnet, dass** die zweiten Wiedergabedaten (32) in gegenüber den ersten Wiedergabedaten (31) unsynchronisierter Weise vorliegende Daten sind.

6. System (10) nach einem der vorhergehenden Ansprüche, **dadurch gekennzeichnet, dass** die zweiten Wiedergabedaten (32) in von den ersten Wiedergabedaten getrennter, nichtsynchronisierter Form gespeichert sind.

7. System (10) nach einem der vorhergehenden Ansprüche, **dadurch gekennzeichnet, dass** die ersten Wiedergabedaten (31) Video-Daten oder Audio-Video-Daten umfassen und dass die zweiten Wiedergabedaten (32) zu den ersten Wiedergabedaten (31) korrespondierende Audio-Daten oder zu den ersten Wiedergabedaten (31) korrespondierende Multimedia-Daten sind.

8. Verfahren zur Wiedergabe von ersten Wiedergabedaten (31) und wenigstens zweiten Wiedergabedaten (32), wobei ein erstes Wiedergabegerät (21) und wenigstens ein zweites Wiedergabegerät (22) vorgesehen ist, wobei das erste Wiedergabegerät (21) die ersten Wiedergabedaten (31) in einen ersten Wiedergabedatenstrom umwandelt und durch Wiedergabe des ersten Wiedergabedatenstroms die ersten Wiedergabedaten (31) wiedergibt, wobei das zweite Wiedergabegerät (22) die zweiten Wiedergabedaten (32) in einen zweiten Wiedergabedatenstrom umwandelt und durch Wiedergabe des zweiten Wiedergabedatenstroms die zweiten Wiedergabedaten (32) wiedergibt, wobei die zweiten Wiedergabedaten (32) hinsichtlich ihrer Wiedergabe auf die ersten Wiedergabedaten (31) bezogen sind, jedoch die ersten und zweiten Wiedergabedaten (31, 32) ansonsten voneinander unabhängig sind, wobei das erste Wiedergabegerät (21) eine Wiedergabe-Fortschrittsinformation (33) generiert, die mit dem Fortschritt der Wiedergabe des ersten Wiedergabedatenstroms am ersten Wiedergabegerät (21) korreliert, wobei das erste Wiedergabegerät (21) die Wiedergabe-Fortschrittsinformation (33) überträgt, wobei die Wiedergabe-Fortschrittsinformation (33) zum Empfang durch das zweite Wiedergabegerät (22) vorgesehen ist und wobei der zweite Wiedergabedatenstrom am zweiten Wiedergabegerät (22) in Abhängigkeit der Wiedergabe-Fortschrittsinformation (33) wiedergegeben wird.

9. Verfahren nach Anspruch 8, **dadurch gekennzeichnet, dass** die Wiedergabe-Fortschrittsinformation (33) vom ersten Wiedergabegerät (21) zum zweiten Wiedergabegerät (22) direkt übertragen wird.

10. Verfahren nach Anspruch 8 oder 9, **dadurch gekennzeichnet, dass** eine Servereinrichtung (11) vorgesehen ist, wobei die Wiedergabe-Fortschrittsinformation (33) vom ersten Wiedergabegerät (21) zur Servereinrichtung (11) und von der Servereinrichtung (11) zum zweiten Wiedergabegerät (22) übertragen wird.

11. Verfahren nach einem der Ansprüche 8 bis 10, **dadurch gekennzeichnet, dass** eine Servereinrichtung (11) vorgesehen ist, wobei
-- die ersten Wiedergabedaten (31) von der Servereinrichtung (11) an das erste Wiedergabegerät (21) und der zweiten Wiedergabedaten (32) von der Servereinrichtung (11) an das zweite Wiedergabegerät (22) übertragen werden, oder wobei
-- lediglich die ersten Wiedergabedaten (31) von der Servereinrichtung (11) an das erste Wiedergabegerät (21) übertagen werden und die zweiten Wiedergabedaten (32) am zweiten Wiedergabegerät (22) lokal vorliegen, oder wobei
-- lediglich die zweiten Wiedergabedaten (32) von der Servereinrichtung (11) an das zweite Wiedergabegerät (22) übertagen werden und die ersten Wiedergabedaten (31) am ersten Wiedergabegerät (21) lokal vorliegen.

12. Verfahren nach einem der Ansprüche 8 bis 11, **dadurch gekennzeichnet, dass** die zweiten Wiedergabedaten (32) in gegenüber den ersten Wiedergabedaten (31) unsynchronisierter Weise vorliegen.

13. Verfahren nach einem der Ansprüche 8 bis 12, **dadurch gekennzeichnet, dass** die zweiten Wiedergabedaten (32) in von den ersten Wiedergabedaten getrennter, nichtsynchronisierter Form gespeichert werden.

14. Verfahren nach einem der Ansprüche 8 bis 13, **dadurch gekennzeichnet, dass** die ersten Wiedergabedaten (31) Video-Daten oder Audio-Video-Daten umfassen und dass die zweiten Wiedergabedaten (32) zu den ersten Wiedergabedaten (31) korrespondierende Audio-Daten oder zu den ersten Wiedergabedaten (31) korrespondierende Multimedia-Daten sind.

15. Computerprogramm mit Programmcodemitteln, mit deren Hilfe alle Schritte eines Verfahrens nach einem der Ansprüche 8 bis 14 durchführbar sind, wenn das Computerprogramm auf einer programmierbaren Einrichtung oder mehreren programmierbaren Einrichtungen des Systems (10) ausgeführt wird.

16. Computerprogrammprodukt mit einem computerlesbaren Medium und einem auf dem computerlesbaren Medium gespeicherten Computerprogramm mit Programmcodemitteln, die dazu geeignet sind, dass alle Schritte eines Verfahrens nach einem der Ansprüche 8 bis 14 durchführbar sind, wenn das Computerprogramm auf einer programmierbaren Einrichtung oder mehreren programmierbaren Einrichtungen des Systems (10) ausgeführt wird.
